# EUROPEAN PATENT SPECIFICATION

(11) **EP 0 393 064 B1**
(45) Date of publication and mention of the grant of the patent: **27.12.1995**
(21) Application number: 88909027.0
(22) Date of filing: 14.09.1988
(51) Int. Cl.: G02B 6/28

(54) **FIBER OPTIC COUPLER**
KOPPLER AUS OPTISCHER FASER
COUPLEUR DE FIBRES OPTIQUES

(30) Priority: 14.09.1987 US 96547
(43) Date of publication of application: 24.10.1990
(73) Proprietor: ASTER CORPORATION, Milford, MA 01757 (US)
(72) Inventor: XU, Jisen Shangai Transmission Lines Res. Inst., Shangai (CH)
(74) Representative: Hitchcock, Esmond Antony
(86) International application number: US8803162
(87) International publication number: WO8902608

(56) References cited:
- WO-A-84/04822
- JP-A- 6 344 607
- JP-A-61 219 011
- JP-A-62 210 409
- US-A- 4 291 940
- US-A- 4 392 712
- US-A- 4 474 431
- US-A- 4 586 784
- US-A- 4 591 372
- US-A- 4 772 085
- Electronics Letters, vol 15, no 14, 5 July 1979, E.G. Rawson et al.: "Bitaper Star Couplers with up to 100 fibre channels", pp 432, 433.

## Description

Low cost optical fibres are very important in applications having very tight cost constraints, e.g., for medical sensors, automotive diagnostic applications and local area networks (LAN). An important component in such applications is a coupler capable of dividing light between two or more fibres. Plastic fibre (i.e. fibre comprised of synthetic resin) has high loss but is useful for applications over a relatively short distance, typically of the order of a few tens of metres in length. Plastic optical fibres typically have large core diameters running from about 240 to 1000 microns and can be used to carry a large amount of light.

Prior art fabrication techniques of plastic couplers include joining flat, polished surfaces of two fibres. Star couplers also have been made using plastic fibres, with clad fibres twisted together to create a coupler.

There is a need for improved techniques for forming couplers, especially for, but not limited to, plastic fibres.

The present invention relates to a fibre optic coupler formed from a plurality of optical fibres within a surrounding sleeve of heat shrink plastic in a shrunken state, each fibre having an optically transmissive core surrounded, along at least most of its length, by an optical cladding layer.

According to the invention the substance of said fibres is preselected to have a heat fusing temperature within the temperature range attained by the fibres during exterior heating of said shrink sleeve, said fibres being in a heat-fused together state along a limited length region within said shrunken sleeve as a result of heat and inter-fibre pressure applied to said fibres by exterior heating of said shrink sleeve. Preferably, the optical fibre has a melting temperature below the melting temperature of said shrink sleeve. The fibres may be constructed of plastic synthetic resin, and may consist of core material only over the fused length.

In a preferred embodiment, at least one filler rod for creating a size compatibility between the diameter of said optical fibres and the inner diameter of said shrunken shrink sleeve is disposed alongside said optical fibres and pressed thereagainst by said shrink sleeve. The outer material of the rod preferably has an index of refraction lower than the index of refraction of said fibre in said fused region. A heat transfer element may be disposed within the shrink sleeve alongside the fibres which is capable, during manufacture of said coupler, of distributing heat to said fibres in said fused region. The element may comprise a core comprising metal, said core being covered by a coating having an index of refraction less than the index of refraction of said fibres in said fused region. The shrink sleeve preferably comprises a material having an index of refraction lower than the index of refraction of said fibres in said fused region. In addition, an exterior package may be formed about the coupler which includes at least one stress-bearing rod outside said shrink sleeve, constructed and arranged to resist bending stress applied to the fused region of said fibres.

The fibres may be arranged in the coupler in a number of preferred configurations, either placed in close association by twisting or crossing, or in a side-by-side substantially parallel relationship.

In a preferred arrangement of the invention, when there are less than six fibres within the sleeve, the fibres may be twisted together prior to exterior heating of said sleeve to heat-fuse said fibres. Alternatively, when more than four fibres are present, the fibres may be arranged in a substantially straight, untwisted relationship within said sleeve at the time of heat shrinking said sleeve, the fibres being in a core-mode coupling relationship with each other.

According to another aspect of the invention, there is provided a method of forming a fibre optic coupler by means of shrinking a sleeve of heat shrink plastic about a plurality of optical fibres, each having an optically transmissive core surrounded, along at least most of its length, by an optical cladding layer. In particular, when forming a coupler of the invention, the substance of said fibres is preselected to have a heat fusing temperature within the temperature range attained by the fibres during exterior heating of said shrink sleeve, and the method comprising the steps of assembling said fibres in a coextensive relationship within said sleeve, applying external heat to said sleeve sufficient to shrink said sleeve to apply inter-fibre pressure between said fibres and to heat said fibres to said fusing temperature, such that said fibres heat-fuse together in a coupling relationship over a limited length region, and allowing said assembly to cool.

Preferred embodiments of the invention will now be described by way of example and with reference to the accompanying schematic drawings wherein:
Fig. 1 is a perspective view of one embodiment of a coupler package including a plastic coupler of the invention; while Fig. 1A is a somewhat diagrammatic side view thereof with the outer protective body broken away;
Fig. 2 is a side section view of one step of the coupler forming process;
Fig. 3 is a side view of a plastic fibre prepared for use in forming the coupler of the invention;
Figs. 4 and 5 are somewhat diagrammatic views of further steps of the coupler forming process;
Figs. 6 and 7 are side views of other embodiments of the plastic coupler of the invention, while Figs. 8 and 8A, and Figs. 9 and 9A are side and end section views of still other embodiments of the plastic coupler;
Figs. 10, 10a and Figs. 11, 11a are views similar to Figs. 8, 8a and Figs. 9, 9a, respectively, illustrating examples of use of a heat transfer element alongside the fibers in the coupler.
Fig. 12 is a cross-sectional view on an enlarged scale of a pair of twisted optical fibres, assembled with a heat transfer element prior to heating while Fig. 12A illustrates the heating of the assembly and depicts details of the resulting contour of the fused fibres.
Fig. 13 is a cross-sectional view similar to Fig. 12A showing a fused fiber coupler while Fig. 14 shows, in cross-section, a fiber optic coupler package employing the coupler of Fig. 13.

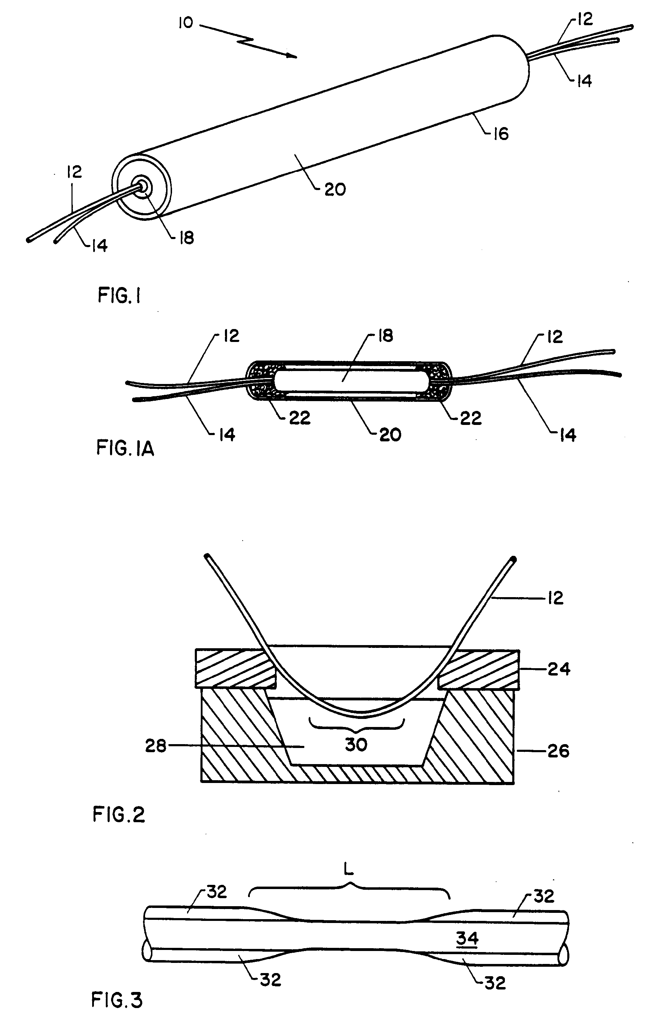

Referring to Fig. 1, an optical fiber unit 10 containing an optical coupler of the invention consists of at least two plastic optical fibers 12, 14 within a protective package 16 assembled about the fiber coupler. Referring to Fig. 1A, the protective package assembled about the fiber consists of an internal body, i.e., shrink tubing 18, an outer protective body which may be plastic, metal, or glass, e.g., a larger diameter tube 20, and intervening masses of relatively soft uniting material 22, e.g., epoxy, at each end.

The multi-mode plastic coupler of the invention is fabricated from plastic fibers having a large central core with slightly higher index of refraction than the surrounding thin cladding, e.g., of fluoroalkyl acrylate and fluoroalkyl methacrylate, e.g., fibers manufactured by Mitsubishi Corp. Referring to Fig. 2, a fiber 12 mounted in holder 24 is placed over container 26 holding a volume of suitable solvent 28, e.g., acetone. The fiber is mounted is such a fashion to cause the bowed segment 30 of the fiber to extend into the solvent. The fiber remains in the solvent until all or most all of the outer cladding layer 32 is removed over a limited length region, L (in certain cases, a small portion of the thickness of the core 34 may be removed as well, e.g., as shown in Fig. 3).

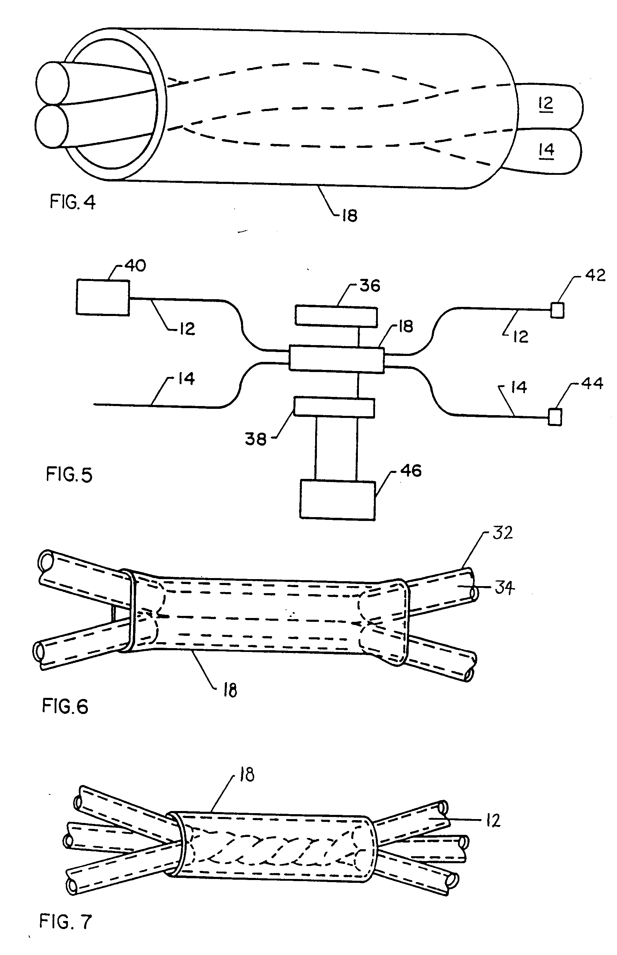

Referring to Fig. 4, two plastic fibers 12, 14, with at least a portion of the outer cladding removed (preferably the cladding has been removed entirely, and a small portion of the core has also been removed) are laid side by side and/or twisted together over one or more twists, with both ends of the fibers outside of the twisted region held in a fixture. A piece of shrink tubing 18, which extends beyond the cladding-removed segment of the fibers, and has the important property of having a refractive index that is less than that of the cores of the optical fibers, e.g., Teflon®, a fluoropolymer sold by E.I. duPont de Nemours Company of Wilmington, Delaware, is placed over the corresponding limited length segments of the two fibers, and it may extend beyond the limited length segment. The low refractive index shrink tubing acts as an external cladding to the core in the limited length segment coupled region. (Shrink tubing with a higher refractive index can be used, but additional light loss will occur wherever the shrink tubing contacts the fiber cores.)

Referring now to Fig. 5, the fibers 12, 14 within shrink tubing 18 are mounted in a fixture between a pair of heater units 36, 38. One end of fiber 12 is connected to a source of light 40 while the opposite ends of fibers 12, 14 are connected to separate detector units 42, 44. Heaters 36, 38 are activated at controllor 46 (two heaters are employed to provide more uniform heating) to cause the shrink tubing 18 to shrink about the fibers, urging the fibers into intimate contact while, at the same time, the fibers are heated to a sufficiently molten state to allow a degree of fusing to occur. By monitoring the level of light transmitted from source 40 to detectors 42, 44 via the coupled region, the heating process is continued until the desired degree of coupling has been achieved.

After the fibers have been properly fused together by the shrink tube, the entire assembly is encased in a suitable package, e.g., in the preferred embodiment, a larger piece of shrink or other tubing 20 (Fig. 1). The large piece of shrink tubing extends beyond the original shrink tubing 18 and, if desired, also out along the plastic fibers, beyond the limited length segment. This outermost shrink tubing encapsulation protects the fiber in the region where it has been somewhat reduced in diameter, and shields it from environmental influences. A convenient aspect of this external encapsulation is its flexibility which permits the coupler to be bent to conform to a desired shaped application, without seriously affecting the performance of the coupler.
The fibres may be joined in side-by-side relationship, without twisting (Fig. 6); the fibres may be crossed; or more than two fibers may be joined together, e.g., by twisting to form a star coupler (Fig. 7).

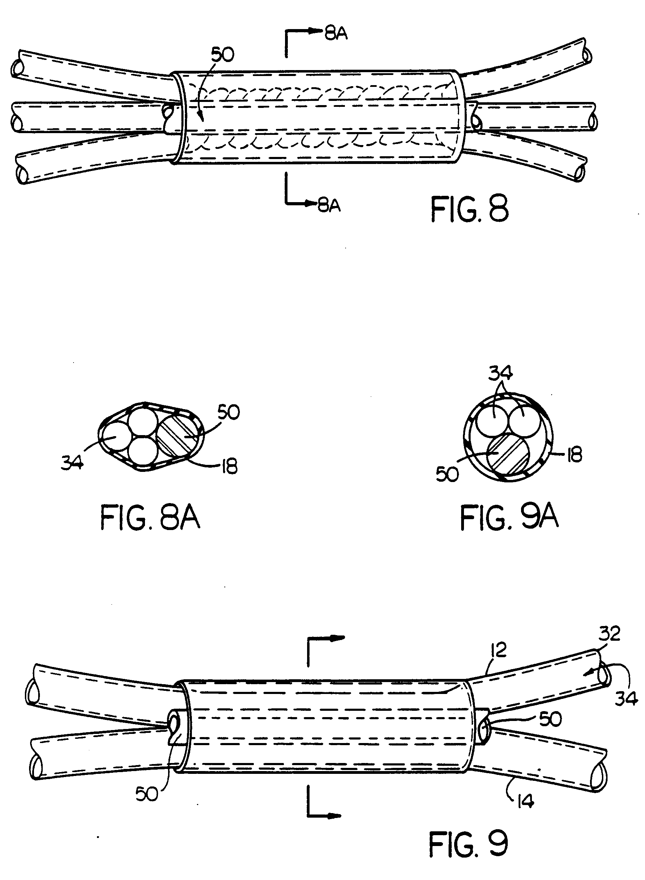

In some cases, where the diameter of the shrink tubing in its fully shrunk condition does not fully contact the fibers, there may be added one or more Teflon® rods 50 to the interior of the shrink tubing to cause a composite of the shrink tubing plus rods to contact the optical fibers to cause the fibers to-fuse together. The primary function of the Teflon® rod is to create a size compatability between the diameter of the fibers and the inner diameter of the shrink tubing (e.g., in Figs. 8 and 8A a three-fiber, twisted star coupler, and in Figs. 9 and 9A a two-fiber, side-by-side coupler).

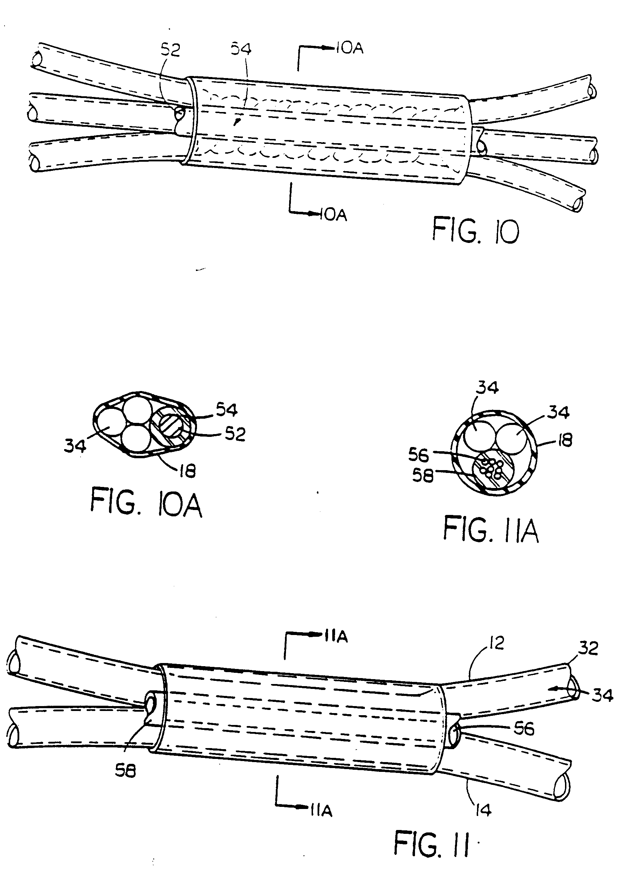

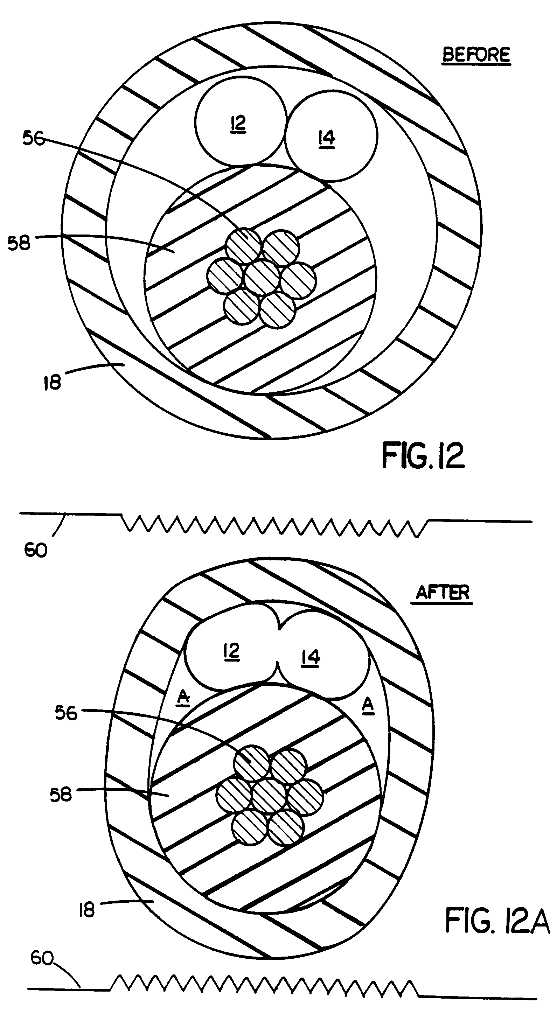

A further important function is achieved by incorporating within the body of the rod a heat transfer element effective to distribute heat longitudinally over the fused region to improve the uniformity of the heat-fusing action. Referring to Fig. 10 and 10a, the heat transfer element is in the form of a solid copper core 52, which carries an outer layer 54 of fluorocarbon (Teflon ®). The outer diameter may be, e.g., 1/2 millimeter while the outer layer may be of, e.g., .002 to .005 inch (50 to 130 microns) thickness. In the embodiment of Figs. 11 and 11a, the heat transfer element is formed by a core 56 comprising a number of copper filaments twisted together, to which again a thin exterior layer 58 of fluorocarbon is applied. In each instance the fluorocarbon has an index of refraction of about 1.4, less than the index of the portions of the plastic fibre along which they lie.

During the heating action the heat transfer element can help to avoid over-heated regions where the plastic fibers might be overheated and deformed too much, that might result in high light loss. Likewise the heat transfer element can help to avoid underheated regions where the deformation and fusing of the fibers together may be insufficient to provide the desired degree of coupling.

Referring to Fig. 12, plastic optical fibers 12, 14 are prepared as described with reference to Fig. 4, completely removing the clad in the region of shrink sleeve 18 and lightly twisted together. A space-filling rod comprised of a heat transfer core 56 and fluorocarbon exterior coating 58 (see Fig. 11 and lla) is inserted within the sleeve, substantially filling the sleeve across from the fibers.

For instance, fibers 12 and 14 have an outer diameter of 250 micron (0.010 inch) with a 5 micron thick clad, available from Mitsubishi under trade designation EK10. (Other ESKA fibers from Mitsubishi may also be used, having cores of polymethylmethacrylate and a thin fluorine polymer as the clad, Mitsubishi's supra fibers can also be used.) The shrink tube is of Teflon® fluorocarbon having an unshrunken outer diameter of 0.050 inch (1270 microns) and inner diameter of 0.032 inch (810 microns). The heat transfer element is copper wire coated with Teflon® fluorocarbon, having an outer diameter of 0.021 inch (530 microns).

Referring to Fig. 12A, the assemblage is placed between a pair of electrical resistance heaters 60 which shrink the shrink tube 18, squeezing the fibres between the wall of the shrink tube and the relatively rigid heat transfer element. This produces inter-fibre pressure between the fibres. Heat transferred through the wall of the shrink sleeve, as well as heat distributed by the copper filament 56 causes the fibers to soften. This simultaneous heating and interfiber pressure causes the fibers to fuse together in a region of contact, producing core-mode coupling between the fibers. This fused coupler has effective cladding. In the regions of respective contact the cladding is provided by the transparent fluorocarbon of the sleeve 18 and the coating 58 of the heat transfer member. Such fluorocarbon may have an index of refraction of about 1.4, less than that of the fused cores of the coupler, (and a shrink temperature of 175°C).

For the substantial portions of the periphery of the fibers not in contact with the fluorocarbon, areas A, the air provides an effective cladding effect (referred to as air cladding).

Excellent mode mixing occurs as a result of the fiber deformation that accompanies the pressured fusing whereas excess deformation is avoidable to prevent excessive light loss.

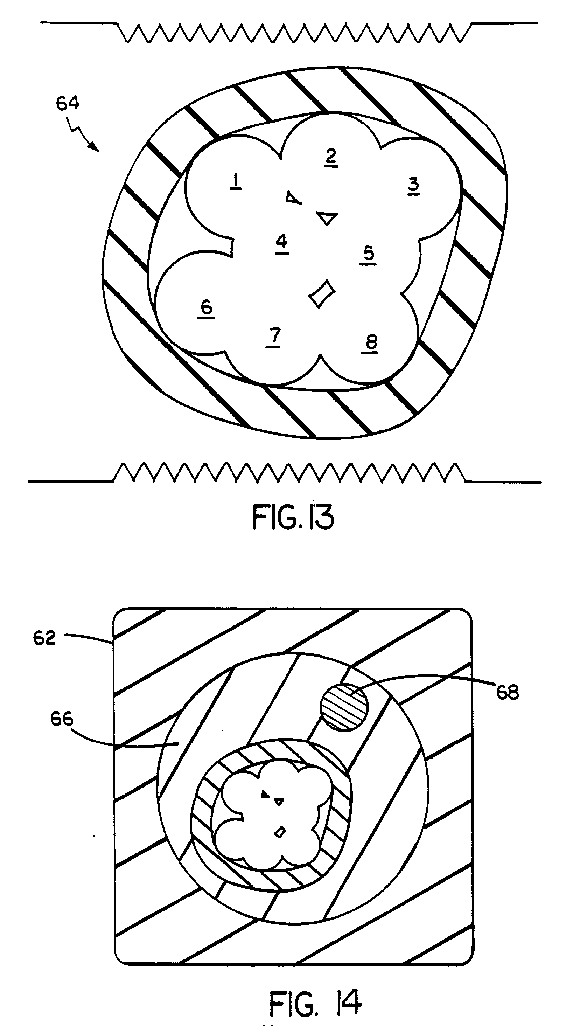

Referring to Fig. 13, a similar coupling having eight fibers 1-8 is shown in its fused state. To prepare for making this coupler, mutual segments of eight of the same plastic fibers as used for Figs. 12 and 12A have their cladding-removed, and the fibers gathered in a loose, unordered, bundle and inserted in a shrink sleeve 18. In this case the fibers substantially fill the cross-section of the unshrunken sleeve.

The assembly is then inserted between the heaters 60, causing the sleeve to shrink and the fibers to heat-fuse together substantially as shown, as a result of the inter-fiber pressure produced by the shrinking of the tube and the fiber heating produced by heat conduction to the fibers across the wall thickness of the shrink sleeve.

It is observed that the fibers in the coupler are effectively coupled to a remarkable degree, despite the unequal areas of fusing that are produced. Note for instance that a number of the fibers, e.g. fibers 1 and 3 are fused to only two of the fibers in the assemblage, with unequal areas of fusing, while other fibers e.g. fibers 4 and 5 are fused to three or four fibers. A substantially smaller percentage of the circumference may be fused while still achieving acceptable coupling in many instances, in which case there can be less distortion of fibers and less light loss.

Referring to Fig. 14, the coupler 64 of Fig. 13 is incorporated in a coupler package comprising an outer housing 62 of molded plastic, and potting material 66, e.g. epoxy, filling the space. A steel stress-bearing rod 68 disposed in the potting material within the housing, extending throughout the length of the coupler, serves to bear stress applied to the exterior of the package, thus protecting the coupler from excess stress and assuring uniform coupler action.

While the fact that a plastic coupler can be simply made is an extremely important feature of the invention, certain of the general principles of the invention can be used to form couplers using other kinds of fibers. As an example, glass fibers having an extremely low melting point, below the melting point of the shrink sleeve, are possible. As an example, there have been proposed high fluorine content special glass fibers, e.g. transparent in the far infrared, having melting points as low as 200°C or lower. Fluorocarbon shrink sleeves having melt temperature in excess of 250°C, up to about 300°C, and initial shrink temperatures of e.g. 175°C may be useful to achieve fused couplers with such glass fibers employing external heating of the sleeve, according to the invention.

## Claims

1. A fibre optic coupler formed from a plurality of optical fibres (12,14) within a surrounding sleeve (18) of heat shrink plastic in a shrunken state, each fibre (12,14) having an optically transmissive core (34) surrounded, along at least most of its length, by an optical cladding layer (32)
CHARACTERIZED IN THAT
the substance of said fibres is preselected to have a heat fusing temperature within the temperature range attained by the fibres during exterior heating of said shrink sleeve, said fibres (12,14) being in a heat-fused together state along a limited length region within said shrunken sleeve as a result of heat and inter-fibre pressure applied to said fibres (12,14) by exterior heating of said shrink sleeve (18).

2. A fibre optic coupler according to Claim 1, characterised in that said optical fibres (12,14) have a melting temperature below the melting temperature of said shrink sleeve (18), the fibres being constructed of plastic synthetic resin.

3. A fibre optic coupler according to any preceding Claim characterized in that over the fused length of said fibres (12,14), said fibres (12,14) consist only of core material.

4. A fibre optic coupler according to any preceding Claim, characterized in that at least one filler rod (50) for creating a size compatibility between the diameter of said optical fibres (12,14) and the inner diameter of said shrunken shrink sleeve (18) is disposed alongside said optical fibres and pressed thereagainst by said shrink sleeve.

5. A fibre optic coupler according to Claim 4, characterized in that the outer material of said filler rod (50) has an index of refraction lower then the index of refraction of said fibres (12,14) in said fused region.

6. A fibre optic coupler according to any preceding Claim, characterized in that there is disposed within said shrink sleeve (18), alongside said fibres (12,14), an elongated heat transfer element, said heat transfer element being capable, during manufacture of said coupler, of distributing heat to said fibres (12,14) in said fused region.

7. A fibre optic coupler according to Claim 6, characterized in that said elongated heat transfer element comprises a core (52,56) comprising metal, said core (52,56) being covered by a coating (54,58) having an index of refraction less than the index of refraction of said fibres (12,14) in said fused region.

8. A fibre optic coupler according to any preceding Claim characterized in that said shrink sleeve (18) comprises a material having an index of refraction lower than the index of refraction of said fibres (12,14) in said fused region.

9. The fibre optic coupler according to any preceding Claim, characterized in that an exterior package (62) is formed about said coupler, said exterior package (62) including at least one stress-bearing rod (68), outside said shrink sleeve, constructed and arranged to resist bending stress applied to the fused region of said fibres (12,14).

10. A fibre optic coupler according to any preceding Claim, characterized in that said fibres (12,14) are placed in close association by twisting.

11. A fibre optic coupler according to any one of Claims 1 to 9, characterized in that said fibres (12,14) are placed in close association by crossing the fibres (12,14).

12. A fibre optic coupler according to any one of Claims 1 to 9, characterized in that said fibres (12,14) are disposed in a side-by-side substantially parallel relationship.

13. A fibre optic coupler according to any one of Claims 1 to 12, characterized in that there are less than six of said optical fibres (12,14) within said sleeve (18), said fibres being twisted together prior to exterior heating of said sleeve (18) to heat-fuse said fibres.

14. A fibre optic coupler according to any one of Claims 1 to 12, characterized in that there are more than four of said fibres (12,14) within said sleeve (18), said fibres (12,14) being in a substantially straight, untwisted relationship within said sleeve (18) at the time of heat shrinking said sleeve (18), the fibres (12,14) being in a core-mode coupling relationship with each other.

15. A method of forming a fibre optic coupler by means of shrinking a sleeve (18) of heat shrink plastic about a plurality of optical fibres (12,14), each fibre (12,14) having an optically transmissive core surrounded, along at least most of its length, by an optical cladding layer,
CHARACTERIZED IN THAT
the substance of said fibres (12,14) is preselected to have a heat fusing temperature within the temperature range attained by the fibres (12,14) during exterior heating of said shrink sleeve (18), and by the steps of
assembling said fibres (12,14) in a coextensive relationship within said sleeve (18),
applying external heat to said sleeve (18) sufficient to shrink said sleeve (18) to apply inter-fibre pressure between said fibres (12,14) and to heat said fibres (12,14) to said fusing temperature, such that said fibres (12,14) heat-fuse together in a coupling relationship over a limited length region, and
allowing said assembly to cool.

16. A method according to Claim 15 characterized in that there are less than six of said optical fibres (12,14) within said sleeve (18), and the fibres are twisted together prior to exterior heating of said sleeve (18) to heat-fuse said fibres.

17. A method according to Claim 15 characterized in that there are more than four of said fibres (12,14) within said sleeve (18), said fibres (12,14) in a substantially straight, untwisted relationship within said sleeve (18) at the time of heat shrinking said sleeve, the fibres (12,14) being in a core-mode coupling relationship with each other.

## Patentansprüche

1. Koppler für Lichtleitfasern, der aus einer Mehrzahl optischer Fasern (12,14) innerhalb eines umgebenden Schlauchs aus wärmeschrumpfenden Kunststoff (18) in einem geschrumpften Zustand gebildet wird, wobei jede Faser (12,14) einen lichtdurchlässigen Kern (34) aufweist, der mindestens entlang des größten Teils seiner Länge durch eine optische Mantelschicht (32) umgeben ist,
DADURCH GEKENNZEICHNET,
daß die Substanz der Fasern so vorgewählt ist, daß sie eine Warmschweiß-Temperatur innerhalb des Temperaturbereichs aufweist, der von den Fasern während äußerer Erwärmung des Schrumpfschlauchs erlangt wird, und sich die Fasern (12,14) als Resultat von Wärme und Druck zwischen den Fasern, die auf die Fasern (12,14) durch äußere Erwärmung des Schrumpfschlauchs (18) angewandt wurden, in einem warmverschweißten Zustand entlang eines begrenzten Längenbereichs innerhalb des Schrumpfschlauchs befinden.

2. Koppler für Lichtleitfasern nach Anspruch 1, dadurch gekennzeichnet, daß die Lichtleitfasern (12,14) eine Schmelztemperatur unter der Schmelztemperatur des Schrumpfschlauchs (18) aufweisen und die Fasern aus plastischem Kunstharz hergestellt sind.

3. Koppler für Lichtleitfasern nach einem der vorhergehenden Ansprüche, dadurch gekennzeichnet, daß über die geschmolzene Länge der Fasern (12,14), die Fasern (12,14) nur aus Kern-Material bestehen.

4. Koppler für Lichtleitfasern nach einem der vorhergehenden Ansprüche, dadurch gekennzeichnet, daß mindestens ein Füllstab (50) längsseits der Lichtleitfasern zur Schaffung einer Maß-Verträglichkeit zwischen dem Durchmesser der Lichtleitfasern (12,14) und dem inneren Durchmesser des geschrumpften Schrumpfschlauchs (18) angeordnet ist und durch den Schrumpfschlauch gegen diese gepreßt wird.

5. Koppler für Lichtleitfasern nach Anspruch 4, dadurch gekennzeichnet, daß das äußere Material des Füllstabs (50) einen Brechungsindex aufweist, der niedriger ist als der Brechungsindex der Fasern (12,14) im verschweißten Bereich.

6. Koppler für Lichtleitfasern nach einem der vorhergehenden Ansprüche, dadurch gekennzeichnet, daß innerhalb des Schrumpfschlauchs (18), längsseits der Fasern (12,14), ein längliches Wärmeübertragungselement angeordnet ist, und dieses Wärmeübertragungselement in der Lage ist, während der Herstellung des Kopplers, Wärme auf die Fasern (12,14) im verschweißten Bereich zu verteilen.

7. Koppler für Lichtleitfasern nach Anspruch 6 , dadurch gekennzeichnet, daß das längliche Wärmeübertragungselement einen Kern (52,56) umfaßt, der Metall enthält, wobei dieser Kern (52,56) durch einen Überzug (54,58) bedeckt ist, der einen Brechungsindex aufweist, der niedriger ist als der Brechungsindex der Fasern (12,14) im verschweißten Bereich.

8. Koppler für Lichtleitfasern nach einem der vorhergehenden Ansprüche, dadurch gekennzeichnet, daß der Schrumpfschlauch (18) einen Stoff enthält, der einen Brechungsindex aufweist, der niedriger ist als der Brechungsindex der Fasern (12,14) im verschweißten Bereich.

9. Koppler für Lichtleitfasern nach einem der vorhergehenden Ansprüche, dadurch gekennzeichnet, daß ein äußeres Gehäuse (62) um den Koppler gebildet wird und dieses äußeres Gehäuse (62) mindestens eine tragende Stange (68) außerhalb des Schrumpfschlauchs enthält, die gestaltet und angeordnet ist, um einer Biegebeanspruchung zu widerstehen, die auf den verschweißten Bereich der Fasern (12,14) angewandt wird.

10. Koppler für Lichtleitfasern nach einem der vorhergehenden Ansprüche, dadurch gekennzeichnet, daß die Fasern (12,14) durch Verdrillung in enge Verbindung gebracht werden.

11. Koppler für Lichtleitfasern nach einem der Ansprüche 1 bis 9, dadurch gekennzeichnet, daß die Fasern (12,14) durch Kreuzen der Fasern in enge Verbindung gebracht werden.

12. Koppler für Lichtleitfasern nach einem der Ansprüche 1 bis 9, dadurch gekennzeichnet, daß die Fasern (12,14) Seite an Seite in einer im wesentlichen parallelen Beziehung angeordnet sind.

13. Koppler für Lichtleitfasern nach einem der Ansprüche 1 bis 12, dadurch gekennzeichnet, daß es weniger als sechs der Lichtleitfasern (12,14) innerhalb des Schlauchs (18) gibt und diese Fasern verdrillt werden, vor der äußeren Erwärmung des Schlauchs (18), um die Fasern zu verschweißen.

14. Koppler für Lichtleitfasern nach einem der Ansprüche 1 bis 12, dadurch gekennzeichnet, daß es mehr als vier der Lichtleitfasern (12,14) innerhalb des Schlauchs (18) gibt, die Fasern (12,14) sich zur Zeit des Wärmeschrumpfens des des Schlauchs (18) in einer im wesentlichen geraden, unverdrillten Beziehung innerhalb des Schlauchs (18) befinden und die Fasern (12,14) in einer Koppel-Beziehung der Kerne zueinander stehen.

15. Verfahren zur Herstellung eines Kopplers für Lichtleitfasern mittels Schrumpfens eines Schlauchs (18) aus wärmeschrumpfenden Kunststoff um eine Mehrzahl von Lichtleitfasern (12,14), wobei jede Faser (12,14) einen lichtdurchlässigen Kern aufweist, der mindestens entlang des größten Teils seiner Länge durch eine optische Mantelschicht umgeben ist,
DADURCH GEKENNZEICHNET,
daß die Substanz der Fasern (12,14) so vorgewählt ist, daß sie eine Warmschweiß-Temperatur innerhalb des Temperaturbereiches aufweist, der von den Fasern (12,14) während äußerer Erwärmung des Schrumpfschlauchs (18) erlangt wird, und durch die Schritte
des Zusammenbaus der Fasern (12,14) in einer gemeinsamen Beziehung innerhalb des Schlauchs (18),
der Anwendung äußerer Wärme auf den Schlauch (18), die ausreichend ist, um den Schlauch (18) zu schrumpfen, um zwischenfasrigen Druck auf die Fasern (12,14) anzuwenden und die Fasern (12,14) auf die Schweiß-Temperatur zu erhitzen, so daß die Fasern (12,14) zusammen in einer Koppel-Beziehung über einen begrenzten Längenbereich warmverschweißt werden,
und des Abkühlenlassens des Aufbaues.

16. Verfahren nach Anspruch 15 dadurch gekennzeichnet, daß es weniger als sechs der Lichtleitfasern (12,14) innerhalb des Schlauchs (18) gibt und diese Fasern verdrillt werden vor der äußeren Erwärmung des Schlauchs (18), um die Fasern zu verschweißen.

17. Verfahren nach Anspruch 15 dadurch gekennzeichnet, daß es mehr als vier der Lichtleitfasern (12,14) innerhalb des Schlauchs (18) gibt und sich die Fasern (12,14) zur Zeit des Wärmeschrumpfens des Schlauchs (18) in einer im wesentlichen geraden, unverdrillten Beziehung innerhalb des Schlauchs (18) befinden und die Fasern (12,14) in einer Koppel-Beziehung der Kerne zueinander stehen.

## Revendications

1. Coupleur de fibre optique formé à partir d'une pluralité de fibres optiques (12, 14) à l'intérieur d'une gaine (18) de plastique thermorétractable déjà rétractée, chaque fibre (12, 14) possédant une âme (34) de transmission optique entourée, sur presque toute sa longueur, d'une couche de gainage optique (32), caractérisé en ce que la matière des fibres est présélectionnée pour posséder une température de fusion comprise dans l'intervalle des températures atteintes par les fibres pendant le chauffage externe de la gaine rétractable, les fibres (12, 14) étant ensemble thermosoudées le long d'un segment de longueur limitée à l'intérieur de la gaine rétractée par suite d'une pression chaude inter-fibre appliquée sur les fibres (12, 14) par chauffage externe de la gaine rétractable (18).

2. Coupleur de fibre optique selon la revendication 1, caractérisé en ce que les fibres optiques (12, 14) possèdent une température de fusion inférieure à la température de fusion de la gaine rétractable (18), les fibres étant constituées d'une résine plastique synthétique.

3. Coupleur de fibre optique selon l'une quelconque des revendications précédentes, caractérisé en ce que sur toute la longueur fusionnée des fibres (12, 14), ces dernières sont constituées uniquement par le matériau de l'âme.

4. Coupleur de fibre optique selon l'une quelconque des revendications précédentes, caractérisé en ce qu'au moins une baguette (50) est disposée le long des fibres optiques et pressée contre celles-ci par la gaine rétractable afin de créer un compatibilité de dimensions entre le diamètre des fibres optiques (12, 14) et le diamètre interne de la gaine rétractée (18).

5. Coupleur de fibre optique selon la revendication 4, caractérisé en ce que le matériau externe de la baguette (50) possède un indice de réfraction plus faible que l'indice de réfraction des fibres (12, 14) de la partie fusionnée.

6. Coupleur de fibre optique selon l'une quelconque des revendications précédentes, caractérisé en ce qu'un élément oblong de transfert de chaleur est disposé à l'intérieur de la gaine rétractable (18), le long des fibres (12, 14), ledit élément de transfert étant capable, pendant la fabrication du coupleur, de répartir la chaleur dans les fibres (12, 14) de la partie fusionnée.

7. Coupleur de fibre optique selon la revendication 6, caractérisé en ce que l'élément de transfert de chaleur comporte une âme (52, 56) comprenant du métal, ladite âme (52, 56) étant recouverte d'un enrobage (54, 58) ayant un indice de réfraction plus faible que l'indice de réfraction des fibres (12, 14) de la partie fusionnée.

8. Coupleur de fibre optique selon l'une quelconque des revendications précédentes, caractérisé en ce que la gaine rétractable (18) comporte un matériau ayant un indice de réfraction plus faible que l'indice de réfraction des fibres (12, 14) de la partie fusionnée.

9. Coupleur de fibre optique selon l'une quelconque des revendications précédentes, caractérisé en ce qu'un manchon extérieur (62) est formé autour du coupleur, ledit manchon incluant au moins une baguette travaillant sous contrainte (68), à l'extérieur de la gaine rétractable, réalisée et disposée pour résister à des contraintes de flexion appliquées à la partie fusionnée des fibres (12, 14).

10. Coupleur de fibre optique selon l'une quelconque des revendications précédentes, caractérisé en ce que les fibres (12, 14) sont placées en association étroite par torsion.

11. Coupleur de fibre optique selon l'une quelconque des revendications 1 à 9, caractérisé en ce que les fibres (12, 14) sont placées en association étroite par croisement des fibres (12, 14).

12. Coupleur de fibre optique selon l'une quelconque des revendications 1 à 9, caractérisé en ce que les fibres (12, 14) sont disposées côte à côte et relativement parallèles.

13. Coupleur de fibre optique selon l'une quelconque des revendications 1 à 12, caractérisé en ce qu'il y a moins de 6 fibres optiques (12, 14) à l'intérieur de la gaine rétractable, lesdites fibres étant torsadées ensemble avant le chauffage externe de la gaine (18) qui soude les fibres.

14. Coupleur de fibre optique selon l'une quelconque des revendications 1 à 12, caractérisé en ce qu'il y a plus de quatre fibres (12, 14) à l'intérieur de la gaine (18), lesdites fibres (12, 14) étant relativement rectilignes et non torsadées à l'intérieur de la gaine (18), et étant couplées l'une avec l'autre par l'âme.

15. Procédé de fabrication d'un coupleur de fibre optique au moyen d'une gaine rétractable (18) dé plastique thermorétractable autour d'une pluralité de fibres optiques (12, 14), chaque fibre (12, 14) ayant une âme de transmission optique entourée, sur presque toute sa longueur, par une couche de gainage optique, caractérisé en ce que la matière des fibres (12, 14) est présélectionnée pour posséder une température de fusion comprise dans l'intervalle des températures atteintes par les fibres pendant le chauffage externe de la gaine rétractable (18), et par les étapes:
- d'assemblage des fibres (12, 14) à l'intérieur de la gaine (18);
- d'application d'une température externe sur la gaine (18) suffisante pour la rétracter;
- d'application d'une pression inter-fibre entre les fibres (12, 14)
- de chauffage des fibres (12, 14) jusqu'à leur température de fusion, de façon à ce que lesdites fibres (12, 14) se soudent ensemble pour former un couplage sur toute une partie de longueur limitée
- permettre audit ensemble de refroidir.

16. Procédé selon la revendication 15, caractérisé en ce qu'il y a moins de 6 fibres optiques (12, 14) à l'intérieur de la gaine (18), et en ce que les fibres sont torsadées ensemble avant le chauffage externe de la gaine (18) qui soude les fibres.

17. Procédé selon la revendication 15, caractérisé en ce qu'il y a plus de 4 fibres (12, 14) à l'intérieur de la gaine (18), lesdites fibres (12, 14) étant relativement rectilignes et non torsadées à l'intérieur de la gaine (18) au moment où la chaleur rétracte la gaine, les fibres (12, 14) étant couplées l'une avec l'autre par l'âme.
